## Europäisches Patentamt

## European Patent Office

## Office européen des brevets

(11) Publication number: **0 321 962 B1**

# EUROPEAN PATENT SPECIFICATION

(45) Date of publication of patent specification: **03.08.94**  (51) Int. Cl.⁵: **G02F 1/133**, G02F 1/135

(21) Application number: **88121428.2**

(22) Date of filing: **21.12.88**

(54) **Active matrix liquid crystal electro-optical device and method of driving it.**

(30) Priority: **23.12.87 JP 325696/87**
**01.09.88 JP 219106/88**

(43) Date of publication of application:
**28.06.89 Bulletin 89/26**

(45) Publication of the grant of the patent:
**03.08.94 Bulletin 94/31**

(84) Designated Contracting States:
**DE FR GB**

(56) References cited:
**EP-A- 0 246 945**
**US-A- 3 725 899**
**US-A- 4 021 798**

(73) Proprietor: **SEIKO EPSON CORPORATION**
**4-1, Nishishinjuku 2-chome**
**Shinjuku-ku Tokyo-to(JP)**

(72) Inventor: **Sato, Takashi c/o Seiko Epson Corporation**
**3-5, Owa 3-chome**
**Suwa-shi Nagano-ken(JP)**

(74) Representative: **Hoffmann, Eckart et al**
**Patentanwalt,**
**Blumbach & Partner,**
**Bahnhofstrasse 103**
**D-82166 Gräfelfing (DE)**

## Description

The present invention relates to an active matrix liquid crystal electro-optical device such as an active matrix display or a light valve in a printer and, more particularly, to the active elements of such a device. It further relates to a method of driving such a device.

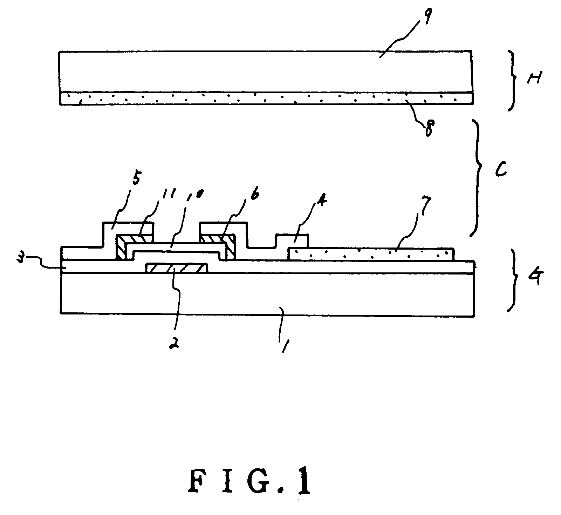

A known active matrix liquid crystal electro-optical device is disclosed in the document SID (Society for Information Display) Symposium Digest of Technical Papers, Vol. XVII, page 296 -297, 1986 and shown in principle in Fig. 1. This known device comprises a first lower substrate G including a thin film transistor with a pixel electrode 7 connected thereto, a second or upper substrate H including a glass substrate 9 and an electrode 8 formed thereon, and a liquid crystal C between the lower substrate G and the upper substrate H. The thin film transistor comprises on a glass substrate 1 a gate electrode 2, a gate insulation film 3, a channel 10 of amorphous Si, source and drain regions 11, 6, and source and drain electrodes 5, 4.

This conventional device suffers from the following problems. A pixel information, i.e. a data voltage applied to the source electrode 5 is transmitted through the channel 10 which is turned on or off via the gate electrode 2, to the liquid crystal C held between the pixel electrode 7 and the electrode 8. The data voltage is held as a charge of a condenser formed by electrodes 7 and 8 and the liquid crystal between them. Due to a leakage current of the thin film transistor, this charge is reduced as time passes. That means, the data voltage acting on the liquid crystal is also reduced as time passes, making it difficult to obtain a clear picture image with a sharp contrast. In addition, the conventional device has a complex construction which requires complex and long manufacturing processes with the result that the yield is low, cost is high and it is difficult to provide a uniform characteristic of the active elements of the device over a large area substrate.

The document EP-A-246 945 discloses an active matrix liquid crystal electro-optical device comprising a first and a second insulating substrate sandwiching a liquid crystal material between them, the first substrate having formed on its surface facing the second substrate a group of first electrodes forming data or selection lines, and the second substrate having formed on its surface facing said first substrate a group of second electrodes forming selection or data lines, respectively, a plurality of island-shaped pixel electrodes and associated with each pixel electrode a respective active element, wherein the active element includes a first element electrode formed by a part of a respective one of said second electrodes, a second element electrode formed by a part of or connected to the associated pixel electrode and a respective active portion of a ferro-electric layer. In this prior art separate, island-shaped ferro-electric layer portions are provided on the substrate, each portion for forming one active element.

It is an object of the present invention to remedy the above explained drawbacks of the prior art and to provide an active matrix liquid crystal electro-optical device comprising active elements which have uniform characteristics over a large area substrate and the capability of being made by simple processes at low cost with high yield for providing a clear picture image with sharp contrast. It is a further object of the present invention to provide a driving method of driving the active matrix liquid crystal electro-optical device.

This object is achieved with an active matrix liquid crystal electro-optical device and a driving method, respectively, as claimed.

Important effects of the present invention are as follows:

(1) The active element of the device according to the present invention adopts a ferroelectric layer as an active layer. The ferroelectric layer has a remanent polarization providing a memory effect. There is no leakage current of the active element itself and the voltage applied to the liquid crystal is held without charge being lost through the active element itself, so that a clear picture image with sharp contrast can be provided.

(2) The ferroelectric layer as an active layer of the active element of the device according to the present invention can be formed by a very simple spin-coat method and the film thickness and film quality of the ferroelectric layer can be made uniform over a large area substrate, so that the active elements have a uniform characteristic over the large area substrate. As a result, the active elements provide a picture image displayed uniformly over a large area substrate.

(3) Since a very small number of photoresist processes, i.e. two through three, are necessary for forming the active element according to the present invention and since the ferroelectric layer as an active layer can be formed by a very simple process called a spin-coat method, the active element can be manufactured at low cost with high yield.

(4) Where the active element of the device according to the present invention uses a ferroelectric layer in a direction in parallel to the upper surface of the insulating substrate, the active element does not suffer from a short-circuit caused by the ferroelectric layer and has a small capacity.

(5) When the ferroelectric layer of the active element of the device according to the present invention is formed by the spin-coat method and has a film thickness greater than that of an electrode between the ferroelectric layer and the insulating substrate, the active element has stepped portions well covered, so that excellent reliability and high yield are obtained.

(6) When the driving method according to the present invention is used, an active matrix display employing active elements that use a ferroelectric layer having an inverting speed of the spontaneous polarizations, which is much lower than corresponding to a selection period (< 16.7 ms), in particular, using organic ferroelectric layers can perform display operation.

Embodiments of the present invention will be described in detail below with reference to the drawings, in which:

Fig. 1
is a cross-sectional view of an active element of a conventional active matrix liquid crystal electrooptical device,

Figs. 2(a), (b)
are a cross-sectional view and a plan view, respectively, of an active element of a first embodiment of the present invention,

Figs. 3(a) - (d)
are diagramms illustrating a hysteresis curve of a ferroelectric material and directions of polarization,

Fig. 4
is a cross-sectional view of a liquid crystal panel,

Fig. 5
is a plan view of a portion of an active matrix display according to the present invention,

Figs. 6(a) - (d)
are equivalent circuits of a pixel of an active matrix display,

Fig. 7
is an equivalent circuit of a portion of the active matrix display,

Fig. 8
is a waveform diagram for explaining a driving method of the active matrix display according to the present invention,

Fig. 9
is a diagram showing the relationship between an inverting speed of the polarization and the electric field intensity of a material composed of a copolymer of VDF and TrFE,

Fig. 10
is a diagram showing the value of $\delta D/\delta \log(t)$ versus time for the material composed of a copolymer of VDF and TrFE,

Figs. 11(a), (b)
are a cross-sectional view and a plan view, respectively, of an active element of a second embodiment of the present invention,

Fig. 12
is a plan view of a portion of an active matrix display using active elements according to the second embodiment,

Figs. 13(a), (b)
are a cross-sectional view and a plan view, respectively, of a modification of the second embodiment, and

Figs. 14(a), (b)
are a cross-sectional view and a plan view, respectively, of a liquid crystal panel using active elements according to the first embodiment of the present invention.

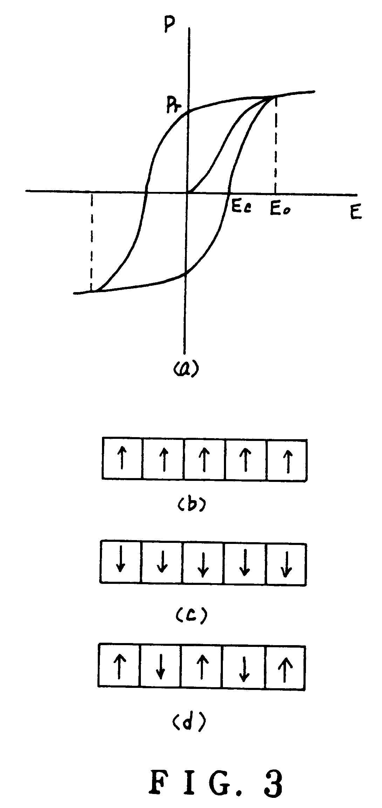

Before specific embodiments of the present invention will be described, the operation principle of an active element of a device according to the present invention will be explained with reference to Figs. 3(a) - (d).

Fig. 3(a) shows a hysteresis curve of a ferroelectric material. In Fig. 3(a) Pr denotes a remanent polarization which is a surface charge density remaining on the surface of the ferroelectric material after an electric field applied to the material is removed. This phenomenon of a remanent polarization allows ferroelectric material to be used as a memory. Fig. 3(b) shows spontaneous polarizations in a ferroelectric material. A positive surface charge is held on the one side of the material toward which the arrows are directed, whereas a negative surface charge is held on the opposite side of the material. When an external electric field which is sufficiently large, i.e. larger than the coercive electric field $E_C$ is applied, the spontaneous polarizations are inverted to the condition shown in Fig. 3(c). At this time the polarities of the charges held on the surfaces of the ferroelectric material are also inverted. When a coercive electric field is applied and the ferroelectric material is not a single crystal material, the spontaneous polarizations after removing the electric field are directed up and down at random as shown in Fig. 3(d). In this case the surface charge of the ferroelectric material is zero.

When a liquid crystal or the like is connected to a ferroelectric material in series or in parallel, a voltage proportional to the surface charge of the ferroelectric material can be applied to the liquid crystal. By inverting periodically the spontaneous polarization, this voltage becomes an AC voltage with changing polarity. It is possible to change the surface charge of the ferroelectric material by controlling the voltage applied to it. Thereby the voltage applied to the liquid crystal can be controlled.

For this control it is better when the ferroelectric material is not a single crystal.

Since the voltage applied to the liquid crystal or the like originates from the surface charge of the ferroelectric material which has a memory characteristic, a voltage written into the liquid crystal or the like is not lost by a leakage current of the active element.

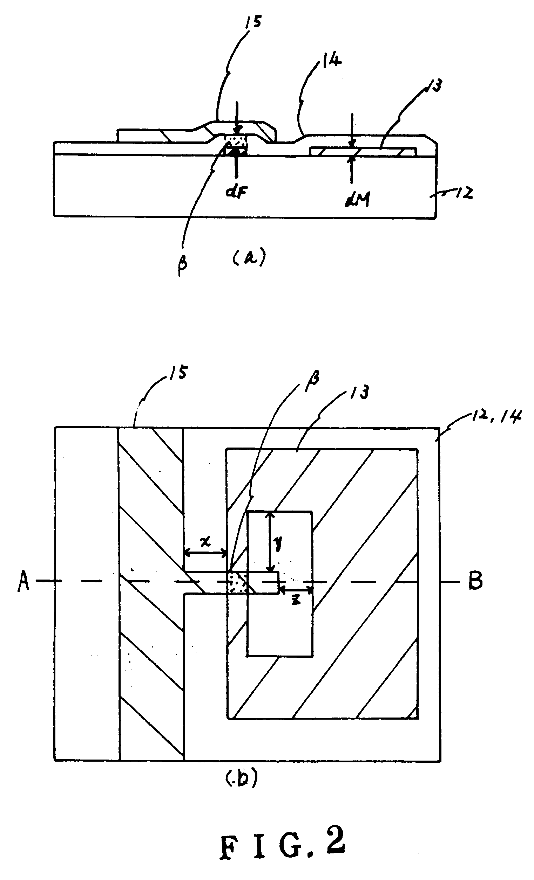

With reference to Figs. 2(a) and 2(b) a first embodiment of the present invention will be described next.

The active element according to this first embodiment comprises a first electrode 13 composed of ITO and disposed on an insulating substrate 12, for instance a glass substrate, a ferroelectric layer 14 of a copolymer of vinylidenefluoride (abbreviated as VDF hereinafter) and trifluoroethylene (abbreviated as TrFE hereinafter) disposed on the first electrode 13 and the insulating substrate 12, and a second electrode 15 of Cr disposed on the ferroelectric layer 14.

Two photoresist processes are necessary for forming this active element.

In the active element according to Figs. 2(a) and 2(b), the film thickness $d_F$ of the ferroeletric layer 14 between the first and second electrodes 13 and 15 is less than the intervals x, y, z between the first and second electrodes 13 and 15 in directions parallel to the insulating substrate 12. Due to such dimensions, when a voltage is applied across the first and second electrodes 13 and 15, by suitably setting the voltage it is possible that only the polarizations of the ferroelectric layer 14 between electrodes 13 and 15 in the direction of $d_F$ are inverted while no inversion is caused in the directions of x, y and z. When $d_F$, x, y, z and the voltage are set as described above, the active portion of the ferroelectric layer 14 of the active element is restricted to the region $\beta$ shown in Figs. 2(a) and 2(b). In other words, the active portion of the ferroelectric layer 14 is restricted to the area contacted by both, the first and the second electrodes 13 and 15. When the active portion is restricted to the said region $\beta$, the following effects are obtained.

First, since the spontaneous polarizations of the ferroelectric layer in the x, y, z directions are not inverted, no crosstalk is caused when this active element is used in an active matrix display, whereby a display of high quality can be provided. Second, since the capacities existing in x, y and z directions can be made smaller than the capacity in the $d_F$ direction, the total capacity provided by the ferroelectric layer 14 between the first and second electrodes 13 and 15 is made smaller. As will be described below, this has a remarkable effect for improving the image quality of an active matrix display using active elements of the described type with a reduction of the driving voltage and the prevention of a crosstalk or the like.

Since the copolymer of VDF and TrFE used for the ferroelectric layer 14 exists in the liquid phase, solved in such solvents as dioxane or methyl ethyl ketone or the like, it can be formed uniformly on a large area by a spin-coat method, allowing uniform active elements to be easily formed over a large area substrate, i.e. an active matrix display with a uniform display characteristic over a large area can be realized. The ferroelectric layer 14 composed of the copolymer of VDF and TrFE can be obtained by baking the layer after it has been formed by the spin-coat method. Since the copolymer of VDF and TrFE is colorless and transparent, at least in the state of a thin film, it has a high light transmittance and, thus, is suitable for a light-receiving type display and, in particular for a light-transmitting type display, whereby a bright display with excellent visuality can be realized.

The thickness $d_F$ of the ferroelectric layer 14 composed of the copolymer of VDF and TrFE is greater than the film thickness $d_M$ of the first electrode 13. After the ferroelectric layer 14 has been applied by a spin-coat method, the insulating substrate 12 is hold for several ten seconds to several minutes with its posture kept horizontally to make the surface of the ferroelectric layer 14 flat. The relationship $d_F > d_M$ can be easily satisfied by adjusting the amount of VDF and TrFE solved in the solvent (adjustment of viscosity) and the optimization of the r.p.m. and the time of a spin-coat apparatus to form the ferroelectric layer 14 with a uniform film thickness and film quality over a large area substrate. This has a significant effect in that active elements having a good uniformity and less dispersion over a large area substrate can be formed. Since the material for forming the ferroelectric layer is a liquid, the process for forming the ferroelectric layer 14 by coating compensates for an unevenness of the first electrode 13 and allows the surface of the ferroelectric layer 14 to be made substantially flat. Since the second electrode 15 is formed on this flat surface, it has a good cross-sectional shape so that the second electrode 15 is not cut at stepped portions and the ferroelectric layer 14 at such stepped portions is not broken by a concentration of the electric field, and thus a reliable active element can be obtained. It is preferable that the first electrode 13 has a film thickness of 10 nm to 300 nm (100 Å - 3000 Å) and the ferroelectric layer has a film thickness 100 nm to 300 nm (1000 Å - 3000 Å) thicker than that of the first electrode 13.

The positional relation between the first electrode 13 and the second electrode 15 shown in Figs. 2(a) and (b) may be reversed, i.e. the second electrode 15, the ferroelectric layer 14 and the first electrode 13 may be formed on the insulating substrate in this order.

With the arrangement of the active element shown in Figs. 2(a) and (b), the allowance (in x, y, z directions) of the alignment in photoresist processes between the first electrode 13 and the second electrode 15 may be increased.

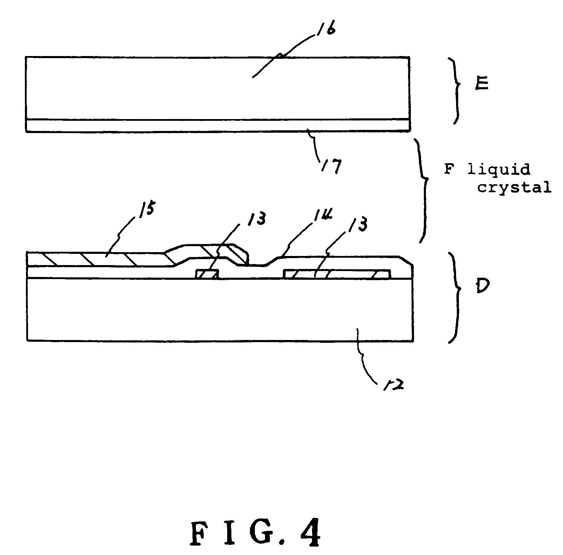

Fig. 4 shows a cross-sectional view of a liquid crystal panel, using active elements according to the first embodiment of the present invention. The liquid crystal panel comprises a first substrate D, a confronting second substrate E and a liquid crystal F held therebetween. The substrate D includes an insulating substrate 12 such as a glass substrate, a first electrode 13 composed of ITO, a ferroelectric layer 14 composed of a copolymer of VDF and TrFE and a second electrode 15 composed of Cr and formed on the insulating substrate 12. The second substrate E includes an insulating substrate 16 such as a glass substrate and an electrode 17 composed of ITO formed thereon.

In a liquid crystal panel according to Fig. 4, the following materials can be used in place of a liquid crystal F: materials that can change their optical transmittance, light-emitting and non-light-emitting state or their color due to an applied electric field, for example materials having an electro-optical effect, an EL material, gas and electrochromic materials and the like.

A liquid crystal panel using an active elements according to the present invention is an active type liquid crystal panel. The active element is especially effective when a liquid crystal not having a memory effect by itself is used such as a TN (twisted nematic type) liquid crystal, a guest-host type liquid crystal, a STN liquid crystal, a NTN liquid crystal or a homeotropic type liquid crystal or a non-smectic liquid crystal.

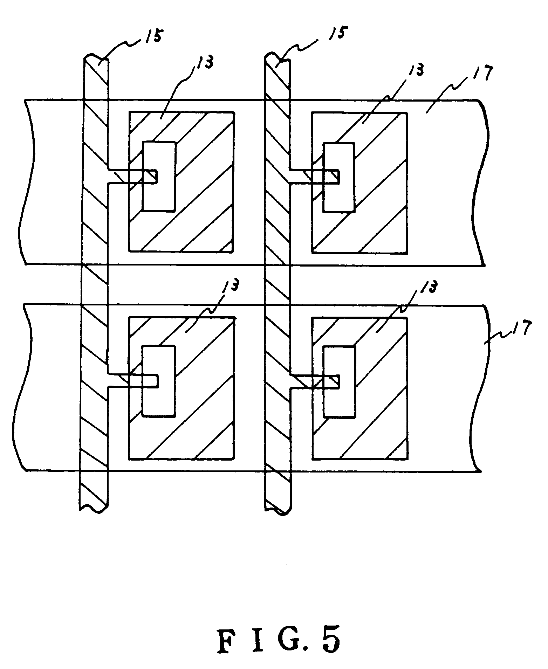

Fig. 5 shows a partial plan view of an active matrix display using active elements according to the first embodiment of the present invention. The active matrix display shown in Fig. 5 is provided by arranging the liquid crystal panels shown in Fig. 4 in a matrix configuration with a plurality of first, second and third electrodes 13, 15, 17. The active matrix display has a liquid crystal between two confronting substrates substantially constructed as explained in connection with Fig. 4. As shown in Fig. 5, the electrodes 13, 15 and 17 are arranged on the respective substrates such that a matrix configuration is achieved. Although the ferroelectric layer 14 overlaps the first electrodes 13 forming a pixel electrode, a bright an clear display with good visuality is obtained because the copolymer of VDF and TrFE used as the ferroelectric material is colorless and transparent.

The ferroelectric layer 14 forming part of the active elements can further be used as an alignment layer for the liquid crystal, when its surface is subjected to a rubbing process. This makes it possible to align the liquid crystal without any need for an additional alignment layer, such as a polyamide layer, over the active elements. Therefore, the manufacturing process can be simplified and the active elements and the active matrix display, respectively, can be produced with a high throughput at low costs and with high yield. The characteristic of the ferroelectric layer is not adversely affected in a rubbing process. The ferroelectric layer 14 also serves as an insulating layer for cutting off a DC voltage applied to the liquid crystal.

An organic film such as polyamide or the like, or an evaporated inclined SiO film may be used as the alignment layer for the confronting substrate.

Spacers which hold the gap distance between the two substrates may be used in the shape of a cylinder or a sphere made by plastic or glass materials.

A uniform gap distance is achieved with a spacer made of an organic material such as PI and produced by a photoresist process.

The first electrodes 13, the second electrodes 15, the electrodes 17 and the ferroelectric layer 14 of the active element according the first embodiment of the present invention and the active matrix display using such active elements can be formed by a sputtering method, a CVD method, a PVD method, an evaporation method, a plating method, a spin-coat method, a printing method such as an offset printing or a screen printing, a roll-coat method, a cast film method, a dipping method, a coating method, a sol-gel method, a hydrolysis and precipitation method, a spray method, an LB method or the like.

A surface-active agent or a coupling layer such as a silane coupling agent or the like may be provided with an interface between the ferroelectric layer 14 and the insulating substrate 12, the first electrode 13 and the second electrode 15 for increasing the adhesion strength.

When active elements according to the present invention are formed by using a spin-coat method, they have a uniform characteristic over a large area substrate. Therefore, an active matrix display using such active elements according to the present invention can display a uniform picture image over a large area substrate.

The material for the first electrode 13, the second electrode 15 and the electrode 17 is not restricted to ITO and Cr. Instead any conductive material such as a metal other than the above mentioned ones, a transparent electrode of e.g. $SnO_2$ or the like, a semiconductor or a silicide, a conductive macromolecule, a conductive paint, a superconducting material or the like may be used.

Likewise, the material used for the insulating substrates 12, 16 is not limited to glass but may be an inorganic material such as a ceramic or an organic material such as plastics, acryl resin, vinyl fluoride or the like. In particular, if a thin plate of an inorganic material or an organic material is used as the insulating substrates 12, 16, a flexible liquid crystal panel can be provided.

Since the thickness of the insulating substrate 12 made of glass or the like does not have an influence on the characteristics of the active element according to the present invention, this thickness can be arbitrarily selected, i.e. the substrate can be made thick and strong or thin and light without affecting the element characteristic.

The material used for the ferroelectric layer 14 of the first active element of the present invention is not restricted to the copolymer of VDF and TrFE, but other ferroelectric materials may be used such as a perovskite type ferroelectric material like $BaTiO_3$, $PbTiO_3$, $WO_3$, a Rochelle salt ferroelectric material like Rochelle salt, heavy hydrogen Rochelle salt, tartrate, an alkali dihydrogen phosphate ferroelectric material like KDP, orthophosphate, sodium arsenate, potassium dihydrogen phosphate, potassium dideuterium phosphate, a guanidine ferroelectric material like GASH, TGS, an amorphous ferroelectric material like niobic acid kalium, glycin sulfate, ammonium sulfate, sodium nitrite, ferrocyanic acid kalium (yellow prussiate of potash), antimony sulfide iodide, $LiNbO_3$, $LiTaO_3$, $PbTiO_3$, a macromolecule ferroelectric material like vinylidene fluoride and its copolymers, a copolymer of VDF and TeFE (tetrafluoroethylene) or the like, a copolymer of cyanitation vinylidene and vinyl acetate, and a copolymer of VDF and TrFE and the like, $Bi_4Ti_3O_{12}$, Fe-B-O or electret as a single crystal or a non-single crystal. Further, a compound of two or more kinds of ferroelectrics, or a compound of a paraelectric material and ferroelectric materials may be used. The inorganic ferroelectric material of such as $BaTiO_3$ has a large remanent polarization and a high switching speed, the amorphous ferroelectric allows a uniform ferroelectric layer to be easily obtained on a large area substrate, and with the organic ferroelectric material a uniform ferroelectric layer can be obtained on a large area substrate at low cost because it is obtained by a spin-coat method. Most of the ferroelectric materials have a stable temperature characteristic because they have almost no change of the dielectric constant and the remanent polarization at the actual operating temperature. A ferroelectric material composed of an organic material holding an inorganic ferroelectric powder therein may also be used.

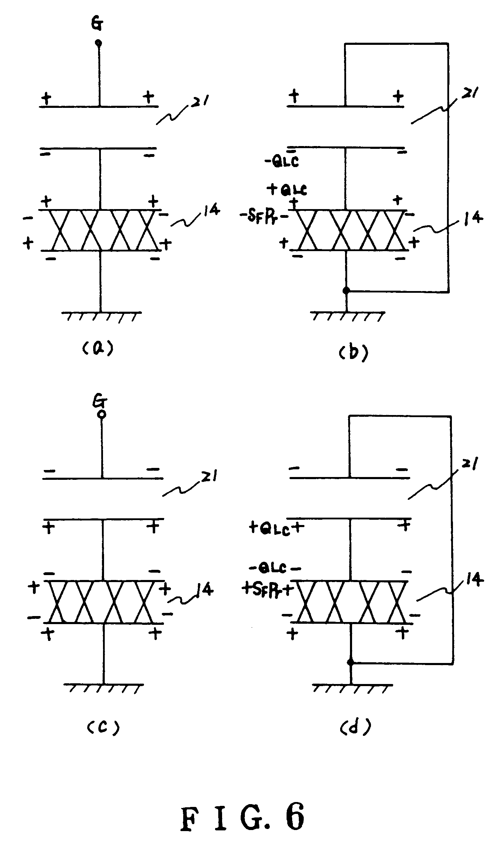

Figs. 6(a) to 6(d) show an equivalent circuit corresponding to one pixel of the active matrix display of Fig. 5. This equivalent circuit will be used in the following to explain the operation principle with respect to one pixel. A pixel represents the liquid crystal panel shown in Fig. 4 and has the capacities of the active portion of the ferroelectric layer 14 and that of the liquid crystal 21 connected in series.

Fig. 6(a) shows the state were a positive voltage sufficient to invert the spontaneous polarizations in the ferroelectric layer 14 is applied during a selection period to a terminal G so that almost all of the spontaneous polarizations are directed downwardly. In other words, by the writing operation the spontaneous polarizations are arranged in a certain direction. After that the terminal G is held at ground potential as shown in Fig. 6(b). This is a holding state, i.e. a state of a non-selection period. In this holding state the ferroelectric layer 14 holds a charge of $-S_F \cdot P_r$, wherein $S_F$ is the area of the active portion of the ferroelectric layer 14, as shown in Figs. 2(a) and 2(b) and $P_r$ is the remanent polarization of the ferroelectric layer expressed as a surface charge density. There is further a distributed free charge $+Q$ between the liquid crystal 21 and the ferroelectric layer 14. The liquid crystal has $Q_{LC} = -C_{LC} \cdot V_{LC}$. In addition, since the voltages $V_F$ and $V_{LC}$ applied to the ferroelectric layer and the liquid crystal, respectively, are equal, the following equations hold:

$$Q_F = -S_F \cdot P_r + Q_{LC} = C_F \cdot V_F \qquad (1)$$

$$Q_{LC} = -C_{LC} \cdot V_{LC} \qquad (2)$$

$$V_F = V_{LC} \qquad (3)$$

where

| | |
|---|---|
| $Q_{LC}$: | charge amount of liquid crystal 21 |
| $C_{LC}$: | capacity of liquid crystal 21 |
| $Q_F$ : | charge amount of ferroelectric layer 14 |
| $C_F$ : | capacity of the active layer in the ferroelectric layer 14 |

From (1), (2), (3) it follows

$$V_F = V_{LC} = -S_F \cdot P_r / (C_F + C_{LC}) \qquad (4)$$

$$Q_{LC} = -C_{LC} \cdot S_F \cdot P_r / (C_F + C_{LC}) \qquad (5)$$

$$Q_F = -C_F \cdot S_F \cdot P_r / (C_F + C_{LC}) \qquad (6)$$

As described above, a voltage $V_F = V_{LC}$ applied to the liquid crystal 21 is proportional to $P_r$ according to equation (4). Thus, increasing $P_r$ of the ferroelectric layer 14 by a poling treatment has a great effect for providing an active element having a large writing capability to the liquid crystal 21.

Since, as explained earlier, the ferroelectric layer 14 holds $P_r$ like a memory and no leakage current is caused by the ferroelectric layer, a good holding characteristic of $V_{LC}$ is provided with the active elements according to the present invention. Active elements with a large writing capability without leakage current provide a clear picture image with a sharp contrast.

As shown in Fig. 6(c), a negative voltage is applied to terminal G in the next field and the spontaneous polarizations are inverted and directed upwardly. The inverted polarizations are again held during the following non-selection period as shown in Fig. 6(d) so that a voltage according to equation (4) but with the opposite polarity is now applied to the liquid crystal 21.

As apparent from equation (4), $V_{LC}$ can be controlled by the value of $P_r$ which itself is controlled by the magnitude of $\pm V_G$, the voltage applied to terminal G. In particular, when the ferroelectric layer 14 is composed of a non-single crystal ferroelectric material, especially a polycrystal or amorphous structure, $P_r$ can be controlled easily.

With an actual active matrix display, a data voltage $\pm V_1$ is applied to terminal G in Fig. 6 during the non-selection periods and a disturbance potential of $\pm (C_F/(C_{LC}+C_F)) \cdot V_1$ is applied as a noise to the liquid crystal. To reduce this noise, $C_{LC}/C_F$ is preferably large, that is 1 or more and even more preferable 10 or more.

A voltage $\pm(C_{LC}/(C_{LC}+C_F)) \cdot V_G$ is applied to the ferroelectric layer 14 during the selection periods. This voltage has to invert the spontaneous polarizations during the selection period. The layer value $C_{LC}/C_F$ determines the layer voltage actually usable to invert the spontaneous polarizations. Also from this aspect, the value of $C_{LC}/C_F$ is preferably large, at least 1 or more, even more preferable 10 or more.

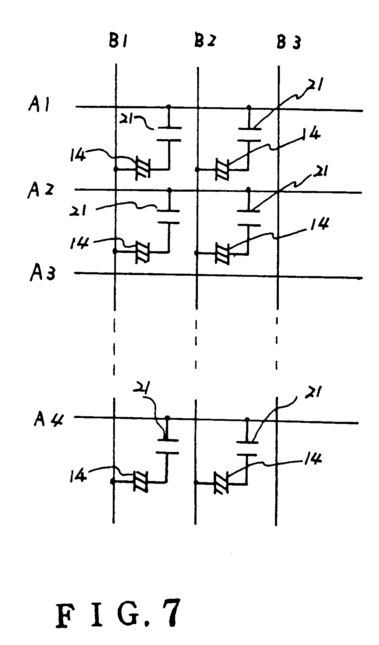

Fig. 7 shows an equivalent circuit of a portion of an active matrix display as shown in Fig. 5. The electrodes 17 on the second substrate (corresponding to E in Fig. 4) form a group of selection lines designated as A1, A2, A3, A4, and the second electrodes 15 of the first substrate (corresponding to D in Fig. 4) form a group of data lines designated as B1, B2 and B3. Respective pixels are formed by the series connection of the capacities formed by corresponding portions of the liquid crystal 21 and corresponding active portions of the ferroelectric layer 14. It is also possible to use the electrodes 17 as a group of data lines and the electrodes 15 as a group of selection lines.

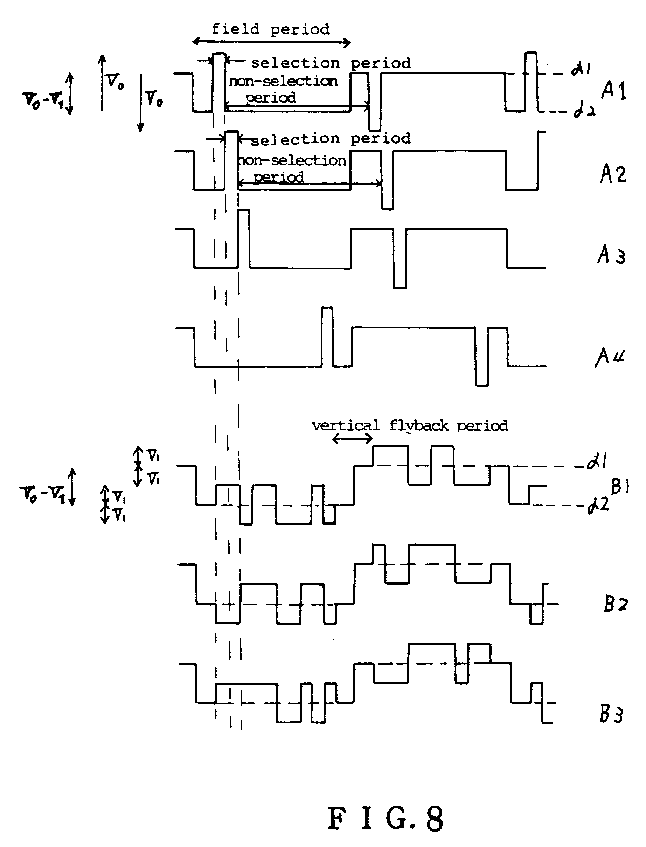

Fig. 8 shows a waveform diagram for explaining a driving method for driving the active matrix display shown by its equivalent circuit in Fig. 7. A1, A2, A3, A4 and B1, B2 and B3 in Fig. 8 are signals applied to the corresponding lines in Fig. 7. One horizontal line of pixels is selected after the other by applying a selection voltage $V_0$ to the selection lines A1, A2, A3, A4 in this order. A data voltage $V_1$ is applied to the respective pixels via the data lines B1, B2 and B3. If $C_{LC} \gg C_F$, almost the whole voltage between a selection line and a data line is applied to the ferroelectric layer 14 of a corresponding pixel.

A case where the pixels corresponding to selection lines A1 are selected in a field period will be considered now. The following voltages are applied to the series connections of the ferroelectric layer 14 and the liquid crystal 21 of those selected pixels corresponding to ON and OFF of the liquid crystal 21:

$$V(ON) = V_0 + V_1$$
$$V(OFF) = V_0 - V_1$$

The voltage applied to the said series connections during the non-selection period is

$$V \text{ (non-selection)} = \pm V_1$$

$V(ON)$ and $V(OFF)$ are determined to satisfy the following relationships with respect to $E_o$, $E_c$ defined in Fig. 3:

$$V(ON) \geq d_F \cdot E_o$$
$$V(OFF) = d_F \cdot E_c$$

($d_F$ is the thickness of the ferroelectric layer 14 as defined in Fig. 2(a)). The spontaneous polarizations of the ferroelectric layer 14 after applying $V(ON)$ and $V(OFF)$ are as shown in Figs. 3(b) and 3(d), respectively. Voltages corresponding to the respective remanent polarizations are applied to the respective portions of the liquid crystal which then take ON or OFF states depending on the applied voltage.

When the selection period for selection line A1 has come to an end, lines A2, A3 and A4 and the pixels corresponding to them are successively selected and $V(ON)$ or $V(OFF)$ is applied to the liquid crystal of the respective pixels. When the selection period is finished, a non-selection period is entered.

When selection line A1 is selected again during the next field period, the following voltages are applied to the pixels corresponding to ON and OFF, respectively:

$$V(ON) = -V_0 - V_1 \leq -d_F \cdot E_o$$
$$V(OFF) = -V_0 + V_1 = -d_F \cdot E_c$$

During the non-selection period the following voltage is applied to the pixels in this field period

$$V(\text{non-selection}) = \pm V_1$$

This time, the spontaneous polarizations of the ferroelectric layer 14 corresponding to a pixel to which V(ON) is applied and a pixel to which V(OFF) is applied are in the state shown in Figs. 3(c) and 3(d), respectively. It will be understood that the polarity of the voltage applied to the liquid crystal this time is opposite to that of the preceding field cycle. In other words, the polarity of the applied voltage is inverted with each field cycle so that an AC drive is performed.

It is not always necessary that the absolute value of V(OFF) is equal to $|d_F \cdot E_c|$ but it can have a different value if the light transmission of the liquid crystal is not greatly different from the case where $|d_F \cdot E_c|$ is applied.

The voltages $V_0$ and $V_1$ are determined as follows in a driving method of the active matrix display according to the present invention. Reference is made to Fig. 8 for explaining the driving method. Since the inverting speed of the spontaneous polarizations which exist in a copolymer of VDF and TrFE strongly depends on the electric field and since the inverting speed is too low to invert the spontaneous polarizations during the selection period (<16.7 ms), the active matrix display operation is difficult using the coercive electric field. Therefore, the voltages $V_0$ and $V_1$ are determined as follows.

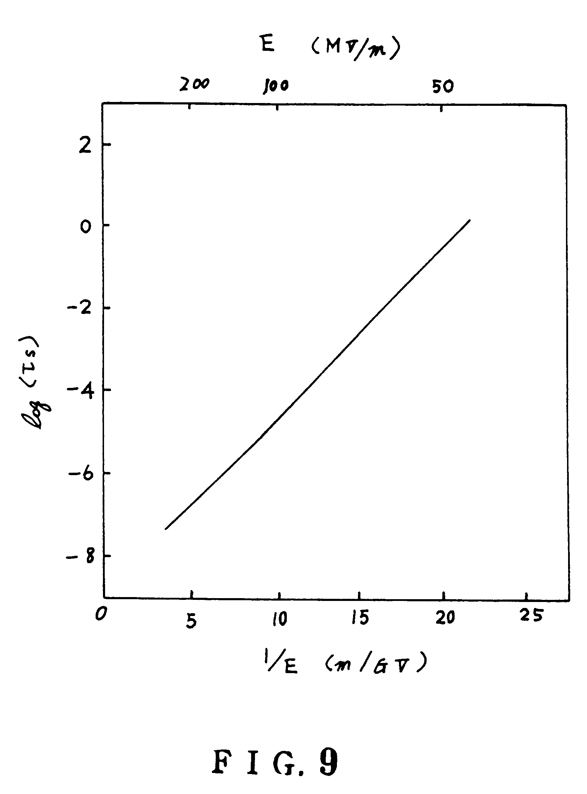

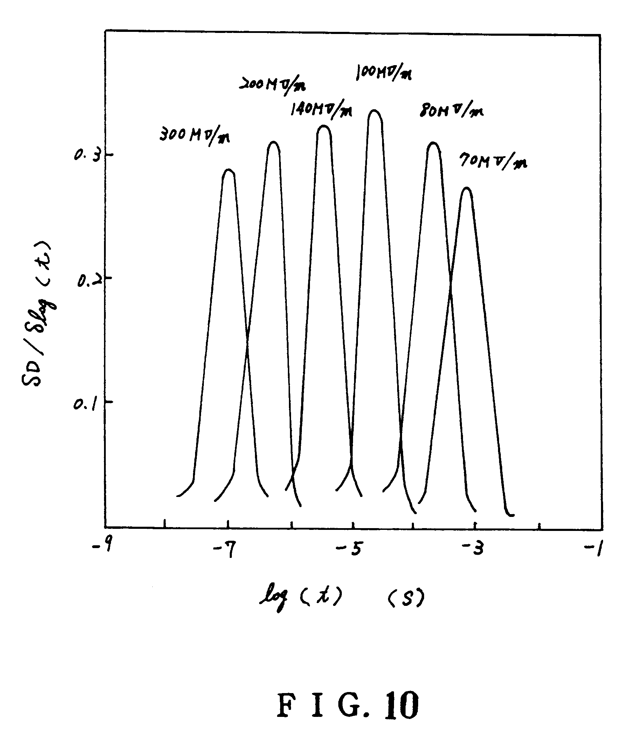

As shown in Fig. 9, the inverting speed $\tau_s$ of the spontaneous polarizations of the copolymer composed of VDF and TrFE strongly depends on the electric field applied to the copolymer and has a value of 1 s at the coercive electric field (~ 50MV/m). Fig. 10 shows a change of the electric displacement D in the copolymer which is dependent on the electric field intensity, versus time. In Fig. 10 respective peaks of $\delta D/\delta \log(t)$ show that approximately half of the spontaneous polarizations have been inverted at the times of the maximum of the peaks whereas the spontaneous polarizations have been substantially completely inverted at the times of the lower ends on the right sides of the respective peaks. In this case, given the selection period t, the voltage V(OFF) may be determined from the electric field strength (parameter in Fig. 10) of a peak having its maximum within the selection period. The voltage V(ON) may be determined from the electric field strength of a peak having its lower right end falling within the selection period. For example, taking the selection period $t \sim 3 \cdot 10^{-6}$ s, since the lower right end of the peak corresponding to 200 MV/m reaches to $t \sim 3 \cdot 10^{-6}$ s, V(ON) is determined from 200 MV/m. Since the maximum of the peak corresponding to 140 MV/m reaches to $t \sim 3 \cdot 10^{-6}$ s, V(OFF) is determined from 140 MV/m. More specifically, with the voltage V(ON) thus determined, almost all of the spontaneous polarizations are inverted within the selection period so that the voltage determined by equation (4) is applied to the liquid crystal. In addition, since approximately half of the spontaneous polarizations are inverted in the case of the voltage V(OFF), the value of Pr of the ferroelectric layer is smaller than the one determined by the voltage V(ON) so that a voltage smaller than in the case of the voltage V(ON) is applied to the liquid crystal. At this time, data can be erased even if just half of the spontaneous polarizations are inverted and then it is not always necessary that V(OFF) coincides with the peaks of $\delta D/\delta \log(t)$.

The liquid crystal will be turned ON and OFF in an AC driving if the voltage applied to the ferroelectric layer 14 is larger than $E_c \cdot d_F$ in both of V(ON) and V(OFF), i.e. if

$$[C_{LC} / (C_{LC} + C_F)] \cdot |V_0 - V_1| > E_c \cdot d_F$$

is satisfied.

A voltage $\pm V_1$ is applied to the ferroelectric layer 14 during a holding period which is a non-selection period. The voltage $V_1$ may be selected from Fig. 9 and Fig. 10 such that the spontaneous polarizations are not inverted during one field period. In other words, the inverting speed of the spontaneous polarizations may be slower than corresponding to one field period.

A gray scale can be displayed as follows. When a data voltage $V_2$ smaller than the data voltage $V_1$ is used, a voltage V(gray scale) for displaying the gray scale in the selection period has to satisfy the following conditions:

$$|V(\text{gray scale})| = |V_0 + V_2| < |V(\text{ON})|$$
$$|V(\text{gray scale})| = |V_0 + V_2| > |V(\text{OFF})|$$

As apparent from Fig. 10, the amount of inversion of the spontaneous polarizations during a selection period in this case will be less than in the case of V(ON) and more than in the case of V(OFF). The remanent polarization $P_r$ then takes an intermediate value of Pr in the case of V(ON) and V(OFF) being applied. Since the voltage $V_{LC}$ applied to the liquid crystal is proportional to $P_r$, a gray scale with as many steps as different $V_2$ levels are provided can be displayed.

The gray scale can also be displayed by applying both of V(ON) and V(OFF) during the selection period rather than applying either of them, and changing the distribution of the applying time of both voltages.

As shown in Fig. 8, when the common potentials $\alpha 1$ and $\alpha 2$ are changed by a value of $V_0 - V_1$, every field period, the maximum voltage is reduced to a relatively low level of $V_0 + V_1$. Under this condition, an inexpensive driving circuit for the active matrix display, using inexpensive standard parts, can be employed instead of any special high voltage driving circuit. The difference between the common potentials $\alpha 1$ and $\alpha 2$ must not necessarily equal $V_0 - V_1$.

Although the common potentials $\alpha 1$ and $\alpha 2$ are changed every field in Fig. 8, they may be changed every selection period or every plurality of selection periods so that the active matrix display has pixels with different polarities of the voltage applied to the liquid crystal of the respective pixels.

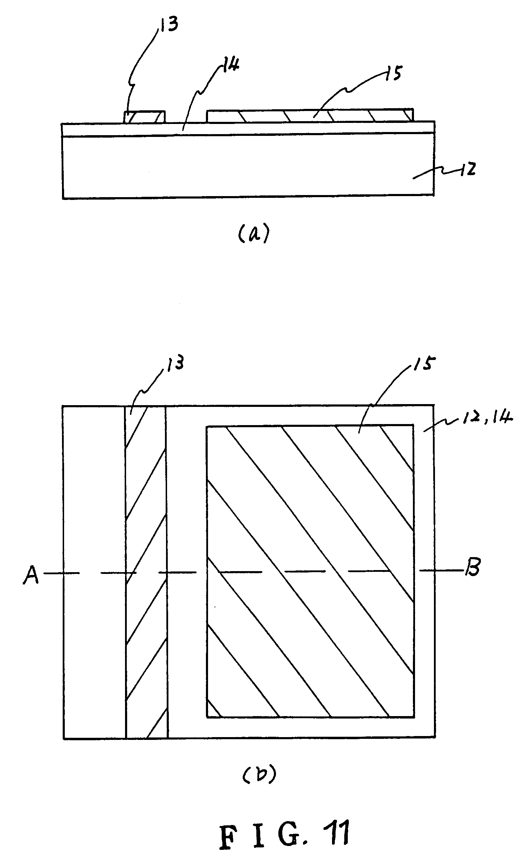

Figs. 11(a) and 11(b) show the arrangement of an active element of a device according to a second embodiment of the present invention. Fig. 11-(b) is a plan view and Fig. 11(a) a cross-sectional view taken along line A - B in Fig. 11(b). A ferroelectric layer 14 composed of a copolymer of VDF and TrFE is disposed on an insulating substrate 12 such as a glass substrate, and a first electrode 13 composed of Cr and a second electrode 15 composed of ITO are disposed on the ferroelectric layer 14. With this embodiment of the present invention, a portion of the ferroelectric layer 14 between the first and second electrodes 13 and 15 works as an active layer. In Fig. 11 the first electrode 13 and the second electrode 15 may be disposed on the insulating substrate 12 with the ferroelectric layer 14 disposed on both electrodes 13, 15.

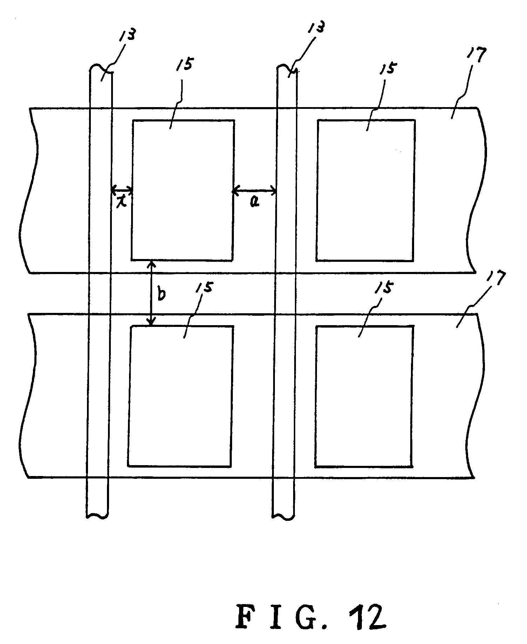

Fig. 12 shows a plan view of a portion of an active matrix display using active elements according to the second embodiment of the present invention, arranged in a matrix configuration. This active matrix display holds a liquid crystal between a first substrate with the active elements constructed as explained with respect to Fig. 11 and a confronting second substrate comprising electrodes 17 on an insulating substrate such as a glass substrate. Pixels addressed by the respective electrodes on the first substrate and the second substrate are arranged in a matrix configuration as shown in Fig. 12. In Fig. 12 the intervals a, b and t satisfy the conditions a > t and b > t. Under these conditions an inversion of spontaneous polarizations in the directions of a and b does not take place. Thus, crosstalk in horizontal and vertical directions is avoided.

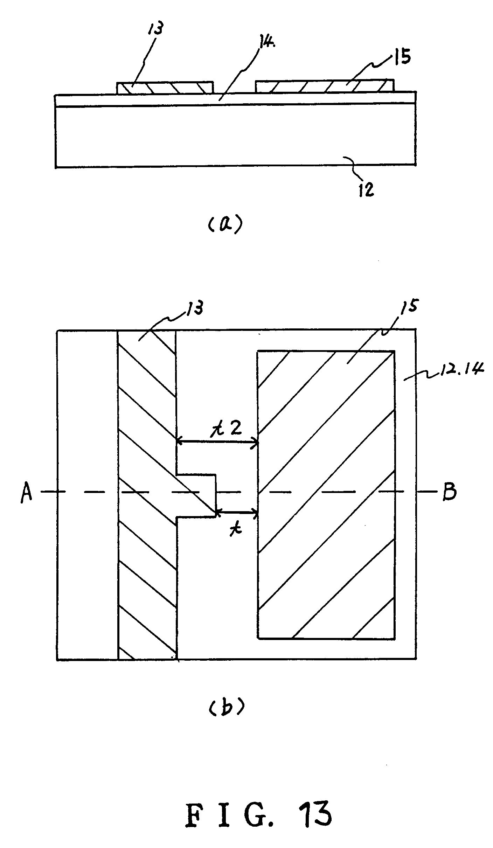

Figs. 13(a) and 13(b) show a modification of the active element according to the second embodiment of the present invention. Fig. 13(b) is a plan view and Fig. 13(a) a cross-sectional view taken along line A - B of Fig. 13(b). The basic arrangement and basic components of the active element shown in Figs. 13(a) and 13(b) are the same as with the active element shown in Figs. 11-(a) and 11(b) with the exception that a portion of the first electrode 13 projects toward the second electrode 15 and the portion of the ferroelectric layer 14 between the projecting portion of the first electrode 13 and the second electrode 15 works as the active layer of this modified active element. In Fig. 13(b) the length t of the active layer portion (distance between electrodes 13 and 15 in the region of the active layer) is smaller than the length t2 of the non-active layer portion of the ferroelectric layer 14 (distance between electrodes 13 and 15 in the region of the non-active layer). Therefore, the capacity of the ferroelectric layer 14 is smaller as compared to the arrangement in Fig. 11, where the entire portion of the ferroelectric layer 14 between the first and second electrodes 13 and 15 works as an active layer.

The same material and the same manufacturing methods as those used for the first electrode 13, the second electrode 15, the insulating substrate 12 and the ferroelectric layer 14 of the active element according to the first embodiment of the present invention may be used for the active elements according to the second embodiment of the present invention. The second embodiment of the present invention may be used in place of the first embodiment for forming the liquid crystal panel and the active matrix display shown in Figs. 4 and 5, respectively. Likewise, the film thickness of the ferroelectric layer 14 may be greater than the film thickness of the first electrode 13 and the second electrode 15 disposed between the insulating substrate 12 and the ferroelectric layer 14.

Although the active element according to the first embodiment of the present invention has a relatively large capacity because a thin ferroelectric layer 14 is used, a large electric field is applied to the ferroelectric layer 14. As a result, this active element is particularly effective when an organic ferroelectric material with a large coercive electric field and a small relative dielectric constant is used for its ferroelectric layer 14.

Although the active element according to the second embodiment of the present invention has a small capacity because it uses the length of the ferroelectric layer 14 in the surface direction of the insulating substrate 12 as the thickness, a large electric field is difficult to be applied to the ferroelectric layer 14. As a result, this active element is effective when inorganic ferroelectric materials which have a large dielectric constant and a small coercive electric field are used for a thin ferroelectric layer 14.

The driving method used for the active matrix display employing active elements according to the first embodiment is applicable for an active matrix display using active elements according to the second embodiment of the present invention.

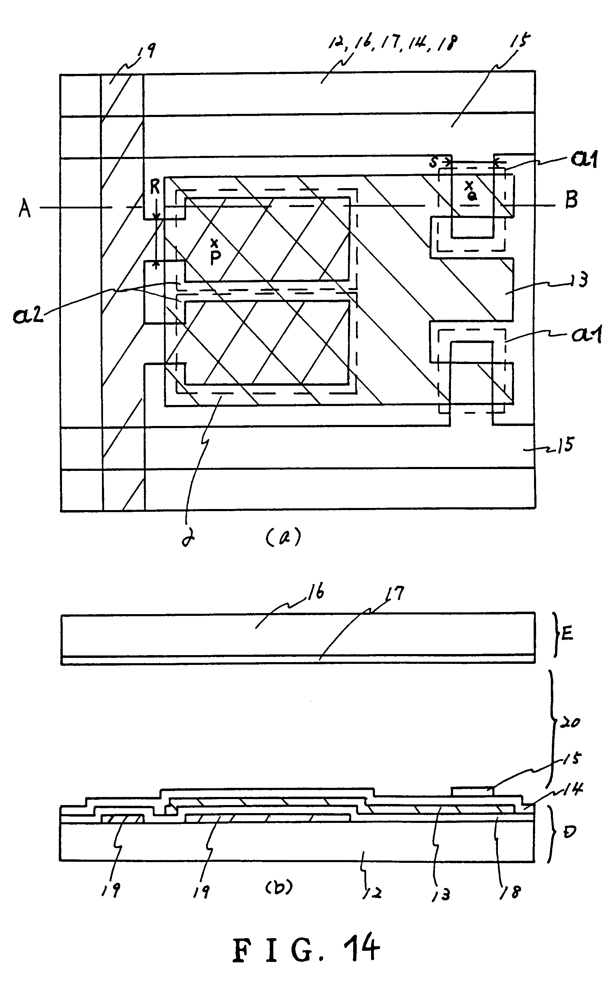

Figs. 14(a) and 14(b) show the arrangement of another liquid crystal panel, using active elements according to the present invention. Fig. 14(b) is a cross-sectional view taken along line A - B of Fig. 14(a). The liquid crystal panel holds a liquid crystal 20 between a first substrate D and a confronting second substrate E. The substrate D comprises a third electrode 19 composed of Al and disposed on an insulating substrate 12 such as a glass substrate, a dielectric layer 18 composed of polyamide and disposed on the third electrode 19, a first electrode 13 composed of ITO and disposed on the dielectric layer 18, a ferroelectric layer 14 composed of a copolymer of VDF and TrFE and disposed on the first electrode 13 and a second electrode 15 composed of Cr and disposed on the ferroelectric layer 14. The second substrate E comprises an insulating substrate 16 such as a glass substrate having an electrode 17 composed of ITO disposed thereon.

In Fig. 14(a) a1 designates regions where active elements according to the first embodiment of the present invention are formed. a2 designates additional capacity regions comprising the dielectric layer 18 held between the third electrode 19 and the first electrode 13. Each active element is connected in series to such an additional capacity. With this arrangement, electrode 17 is kept at a constant voltage and the voltages $V_1$ and $V_0$, which are applied to the third electrode 19 and the second electrode 15, are applied to a series connection composed of the additional capacity and the capacity of the ferroelectric layer 14 of the active element to drive the active element. The charge held by the first electrode 13 and electrode 17 is originated to make a voltage to be applied to the liquid crystal 20.

With the arrangement shown in Fig. 14, even if pin holes exist in the ferroelectric layer 14, forming the active element or the dielectric layer 18 forming the additional capacity, a substantially normal voltage can be applied to the liquid crystal 20. For example, when defects are caused to points P or Q in Fig. 14 due to pin holes, sections R and S in the drawing may be cut.

An active matrix display is formed by arranging the liquid crystal panels shown in Fig. 14 with a matrix configuration of pixels, and this active matrix display is driven by the driving method according to the present invention. The same voltage is applied to the two electrodes 15 in Fig. 14 at the same timing. However, different voltages may be applied to detect the position of defects. When an active matrix display is formed by use of the liquid crystal panel shown in Fig. 14, the electrode 17 may be a flat or stripe-shaped electrode as shown in Fig. 5.

## Claims

1. An active matrix liquid crystal electro-optical device comprising

   a first and a second insulating substrate (12, 16) sandwiching a liquid crystal material between them,

   said first substrate (16) having formed on its surface facing the second substrate a group of first electrodes (17) forming data or selection lines, and

   said second substrate (12) having formed on its surface facing said first substrate a group of second electrodes (15) forming selection or data lines, respectively, a plurality of island shaped pixel electrodes (13) and associated with each pixel electrode a respective active element,

   wherein said active element includes a first element electrode (15; 15a) formed by a part of or connected to a respective one of said second electrodes (15), a second element electrode (13; 13a) formed by a part of or connected to the associated pixel electrode (13) and a respective active portion of a ferro-electric layer (14), said ferro-electric layer extending substantially over all of said surface, said first and second element electrodes both contacting said active portion of the ferro-electric layer at positions spaced apart from each other such that the distance (dF) between the two element electrodes across said active portion of the ferro-electric layer is the smallest among the distances between each of two electrodes or electrode portions contacting said ferro-electric layer.

2. The device of claim 1 wherein said first and second element electrodes (15, 13; 15a, 13) are provided on the same side of said ferro-electric layer (14).

3. The device of claim 1 wherein said first and second element electrodes (15a, 13a) are provided on opposite sides of said ferro-electric layer in registration with respect to each other and with said active portion inbetween.

4. The device of any one of claims 1 to 3 wherein said ferro-electric layer (14) forms an alignment layer for aligning the molecules of said liquid crystal material.

5. The device of any one of claims 1 to 4, wherein the second electrodes and the element electrodes connected to them or formed by a part of them and/or the pixel electrodes and the element electrodes connected to them or formed by a part of them are disposed between the said second substrate (12) and said ferro-electric layer and have a film thickness of 10 to 300 nm whereas the ferroelectric layer (14) has a film thickness of 100 to 300 nm more than that of said electrodes.

6. A method of driving a device as defined in any one of claims 3 to 5, said method comprising

successively applying a selection voltage $\pm V_0$ to respective selection lines of the group of selection lines (A1-A4) during respective field periods and

applying a data voltage $\pm V_1$ to the group of data lines,

wherein an absolute value $|V_0 - V_1|$ of the difference between the selection voltage $\pm V_0$ and the data voltage $\pm V_1$ satisfies the condition:

$$[C_{LC} / (C_{LC} + C_F)] \cdot |V_0 - V_1| > E_C \cdot d_F$$

where

$E_C$ : coercive electric field of the ferroelectric layer

$d_F$ : the distance between the element electrodes across the active portion of the ferro-electric layer

$C_F$ : capacity of an active portion of the ferroelectric layer per pixel

$C_{LC}$: capacity of the liquid crystal per pixel.

**Patentansprüche**

1. Elektrooptische Aktivmatrix-Flüssigkristallvorrichtung, umfassend

ein erstes und ein zweites isolierendes Substrat (12, 16), die zwischen sich ein Flüssigkristallmaterial einschließen,

wobei auf der dem zweiten Substrat zugewandten Oberfläche des ersten Substrats (16) eine Gruppe erster Elektroden (17) ausgebildet ist, die Daten- oder Wählleitungen bilden, und

auf der dem ersten Substrat zugewandten Oberfläche des zweiten Substrats (12) eine Gruppe zweiter Elektroden (15), die Wähl- bzw. Datenleitungen bilden, eine Vielzahl von inselförmigen Pixelelektroden (13) und in Zuordnung zu jeder Pixelelektrode ein jeweiliges aktives Element ausgebildet sind,

wobei das aktive Element eine erste Elementelektrode (15; 15a), die mit einer jeweiligen der zweiten Elektroden (15) verbunden ist oder von einem Teil derselben gebildet wird, eine zweite Elementelektrode (13; 13a), die mit der zugehörigen Pixelelektrode (13) verbunden ist oder von einem Teil derselben gebildet wird, und einen jeweiligen aktiven Abschnitt einer ferroelektrischen Schicht (14) einschließt, wobei sich die ferroelektrische Schicht im wesentlichen über die Gesamtheit der Oberfläche erstreckt und die erste und die zweite Elementelektrode beide den aktiven Abschnitt der ferroelektrischen Schicht an Stellen kontaktieren, die voneinander derart entfernt liegen, daß der Abstand (dF) zwischen den beiden Elementelektroden über den aktiven Abschnitt der ferroelektrischen Schicht der geringste unter den Abständen zwischen jeweils zwei Elektroden oder Elektrodenabschnitten ist, die die ferroelektrische Schicht kontaktieren.

2. Vorrichtung nach Anspruch 1, bei der die erste und die zweite Elementelektrode (15, 13; 15a, 13) auf derselben Seite der ferroelektrischen Schicht (14) vorgesehen sind.

3. Vorrichtung nach Anspruch 1, bei der die erste und die zweite Elementelektrode (15a, 13a) an gegenüberliegenden Seiten der ferroelektrischen Schicht in Ausrichtung aufeinander und mit dem aktiven Abschnitt zwischen sich vorgesehen sind.

4. Vorrichtung nach einem der Ansprüche 1 bis 3, bei dem die ferroelektrische Schicht (14) eine Ausrichtungsschicht zur Ausrichtung der Moleküle des Flüssigkristallmaterials bildet.

5. Vorrichtung nach einem der Ansprüche 1 bis 4, bei dem die zweiten Elektroden und die mit ihnen verbundenen oder von einem Teil derselben gebildeten Elementelektroden und/oder die Pixelelektroden und die mit ihnen verbundenen oder von einem Teil derselben gebildeten Elementelektroden zwischen dem zweiten Substrat (12) und der ferroelektrischen Schicht angeordnet sind und eine Filmdicke von 10 bis 300 nm aufweisen, während die ferroelektrische Schicht (14) eine Filmdicke von 100 bis 300 nm mehr als die der Elektroden aufweist.

6. Verfahren zur Ansteuerung einer Vorrichtung, wie sie in irgendeinem der Ansprüche 3 bis 5 definiert ist, umfassend

aufeinanderfolgendes Anlegen einer Wählspannung $\pm V_0$ an jeweilige Wählleitungen der Gruppe von Wählleitungen (A1-A4) während jeweiliger Bildperioden, und

Anlegen einer Datenspannung $\pm V_1$ an die Gruppen von Datenleitungen,

wobei ein Absolutwert $|V_0 - V_1|$ der Differenz zwischen der Wählspannung $\pm V_0$ und der Datenspannung $\pm V_1$ die Bedingung erfüllt:

$[C_{LC} /(C_{LC} + C_F)] \cdot |V_0 - V_1| > E_C \cdot d_F$

wobei

$E_C$ : elektrische Koerzitivfeldstärke der ferroelektrischen Schicht

$d_F$ : Abstand zwischen den Elementelektroden über den aktiven Abschnitt der ferroelektrischen Schicht

$C_F$ : Kapazität eines aktiven Abschnitts der ferroelektrischen Schicht pro Pixel

$C_{LC}$: Kapzität des Flüssigkristalls pro Pixel.

## Revendications

1. Un dispositif électro-optique à cristal liquide à matrice active, comprenant

   des premier et second substrats isoiants (12, 16) entre lesquels est intercalée une matière à cristal liquide,

   le premier substrat (16) portant sur sa surface qui fait face su second susbtrat un groupe de premières électrodes (17) formant des lignes de données ou de sélection, et

   le second substrat (12) portant sur sa surface qui fait face au premier substrat un groupe de secondes électrodes (15) formant des lignes de sélection ou de données, respectivement, un ensemble d'électrodes de pixel en forme d'îlots (13) et un élément actif respectif associé à chaque électrode de pixel,

   dans lequel l'élément actif comprend une première électrode d'élément (15 ; 15a) qui est formée par une partie de l'une respective des secondes électrodes (15) ou qui est connectée à celle-ci, une seconde électrode d'élément (13 ; 13a) qui est formée par une partie de l'électrode de pixel associée (13) ou qui lui est connectée, et une partie active respective d'une couche ferroélectrique (14), cette couche ferroélectrique s' étendant pratiquement sur toute la surface précitée, les première et seconde électrodes d'élément venant toutes deux en contact avec la partie active de la couche ferroélectrlque à des positions mutuellement espacées, de façon que la distance ($d_F$) entre les deux électrodes d'élément sur la partie active de la couche ferroélectrique soit la plus petite parmi les distances entre chacune de deux électrodes ou parties d' électrode venant en contact avec la couche ferroélectrique.

2. Le dispositif de la revendication 1, dans lequel les première et seconde électrodes d'éléments (15, 13 ; 15a, 13a) sont formées sur le même côté de la couche ferroélectrique (14).

3. Le dispositif de la revendication 1, dans lequel les première et seconde électrodes d'élément (15a, 13a) sont formées sur des côtés opposés de la couche ferroélectrique, en coïncidence mutuelle et avec la partie active entre elles.

4. Le dispositif de l'une quelconque des revendications 1 à 3, dans lequel la couche ferroélectrique (14) forme une couche d'alignement pour aligner les molécules de la matière à cristal liquide.

5. Le dispositif de l'une quelconque des revendications 1 à 4, dans lequel les secondes électrodes et les électrodes d'élément qui leur sont connectées, ou qui sont formées par une partie d'entre elles et/ou les électrodes de pixel et les électrodes d'élément qui leur sont connectées ou qui sont formées par une partie d'entre elles, sont disposées entre le second substrat (12) et la couche ferroélectrique et elles ont une épaisseur de pellicule de 10 à 300 nm, tandis que la couche ferroélectrique (14) a une épaisseur de pellicule supérieure de 100 à 300 nm à celle des électrodes précitées.

6. Un procédé pour attaquer un dispositif défini dans l'une quelconque des revendications 3 à 5, ce procédé comprenant :

   l'application successive d'une tension de sélection ± $V_0$ à des lignes de sélection respectives du groupe de lignes de sélection (A1-A4) pendant des périodes de trame respectives, et

   l'application d'une tension de données ± $V_1$ au groupe de lignes de données,

   dans lequel la valeur absolue $|V_0 - V_1|$ de la différence entre la tension de sélection ± $V_0$ et la tension de données ± $V_1$ satisfait la condition :

   $[C_{LC} / (C_{LC} + C_F)] \cdot |V_0 - V_1| > E_C \cdot d_F$

   dans laquelle

   $E_C$ : champ électrique coercitif de la couche ferroélectrique

   $d_F$ : distance entre les électrodes d'élément sur la partie active de la couche ferroélectrique

   $C_F$ : capacité d'une partie active de la couche ferroélectrique, par pixel

   $C_{LC}$ : capacité du cristal liquide, par pixel.

F I G.1

(a)

(b)

# FIG. 2

(a)

(b)

(c)

(d)

F I G. 3

F I G. 4

FIG. 5

EP 0 321 962 B1

F I G. 6

18

F I G. 7

F I G. 8

F I G. 9

F I G. 10

(a)

(b)

F I G. 11

F I G. 12

(a)

(b)

F I G. 13

F I G. 14